# EUROPEAN PATENT APPLICATION

(11) **EP 0 953 289 A2**
(43) Date of publication of application: **03.11.1999**
(21) Application number: 98302752.5
(22) Date of filing: 08.04.1998
(51) Int. Cl.: A23C 11/04, A23C 11/06, A23C 21/04

(54) **High fat and high protein content milk replacer and process for its production**

(71) Applicant: Protein Technologies International, Inc., St Louis, Missouri 63164-0001 (US)
(72) Inventor: Cho, Iue Chung, St. Louis, MO 63128 (US); Bates, Gregory A., Collinsville, IL 62234 (US)
(74) Representative: Tubby, David George

(57) **Abstract**

A stable high fat and high protein content emulsion and milk replacer are provided. The emulsion contains a protein material, a fat, and a carbohydrate, where the protein material is present in about 25%-50% by weight of the total weight of the protein material, fat, and carbohydrate, the fat is present in about 25%-50% by weight, and the carbohydrate is present in at least about 10% by weight. The milk replacer composition contains a protein material and a fat, where the protein material and fat are each present in at least about 25% of the composition by weight. Preferably the milk replacer composition also contains at least 10% of a carbohydrate by weight. A process for producing the emulsion is provided wherein an aqueous mixture of a first portion of a protein material, a fat, and a carbohydrate is formed, the aqueous mixture is homogenized at a temperature and pressure effective to form a homogenized emulsion, and the homogenized emulsion is mixed with a second portion of protein. The milk replacer is formed by spray drying the emulsion.

## Description

This invention relates to methods for making stable high fat and high protein content fat-protein emulsions which have improved fat suspension characteristics in a high protein content emulsion, the emulsions resulting therefrom, and improved dry milk replacer compositions utilizing the improved emulsions.

Milk is a protein-mediated emulsion comprising micelle structures in which small fat globules are surrounded by a protein coat, thereby allowing the fat to disperse in an aqueous liquid medium. In dry milk replacers, which are well known in the art for use, e.g., as infant formulas, a protein component is combined with a fat component to produce micelles of this type which form a milky solution upon dispersion of the milk replacer in water.

However, the fat-protein emulsions from which such milk replacers are formed have had a practical upper limit on the concentration of protein that can be incorporated into the emulsion without the protein aggregating and interrupting the formation of the protein-fat micelles. Aggregated protein is to be avoided in milk replacers since the aggregated protein gives milk formed from the milk replacer a gritty mouthfeel. Fat freed from incorporation into micelles by the aggregation of the protein may aggregate into fat globules. Aggregated fat is to be avoided as well since the aggregated fat forms relatively large fat globules which give the resulting milk a greasy mouthfeel.

In a conventional process for forming a milk replacer composition the entire protein component of the composition, typically casein or isolated soy protein, is mixed together at one time with fat in water to form a homogenous emulsion. The fat typically comprises 60% to 80% of the total weight of the components of the mixture, which may include carbohydrates as well as the protein and the fat. Typically the protein forms not more than 20% of the total weight of the components used to form the composition since higher concentrations of protein lead to the formation of the undesirable protein aggregates and fat aggregates in the emulsion. The homogenized emulsion is then dried, typically by spray drying, to form a dry milk replacer composition which forms a milk upon rehydration.

In other conventional processes for forming milk replacer compositions the protein and the fat are dry blended together. The protein content in a dry-blended composition also typically does not exceed 20% of the total weight of the dry-blended components of the composition so that protein aggregates and fat aggregates are not formed when the composition is dispersed in water to form a milk.

It is desirable to produce stable high fat and high protein content emulsions, as well as dry milk replacer compositions having high protein and high fat levels which do not form significant amounts of protein aggregates or fat aggregates upon hydration.

In one aspect, the present invention provides a composition which is a stable aqueous emulsion of a protein material, a fat, and a carbohydrate. The fat is present in an amount of about 25% to about 50% of the total weight of the protein material, fat and carbohydrate. The protein material is present in an amount of about 25% to about 50% of the total weight of the protein material, fat, and carbohydrate, and the carbohydrate is present in an amount of at least about 10% of the total weight of the protein material, fat, and carbohydrate.

In another aspect, the present invention provides a dry milk replacer composition containing a protein material and a fat. The fat is present in an amount of at least 25% by weight of composition, and the protein material is present in an amount of at least 25% by weight of the composition. The fat and the protein material are sufficiently homogeneously dispersed in the composition to effectively inhibit fat agglomeration and protein material agglomeration.

In yet another aspect, the present invention provides a method for forming a stable high protein and high fat content emulsion. A fat, a carbohydrate, and a first portion of a protein material are combined in an aqueous mixture. The aqueous mixture is homogenized at a temperature and a pressure effective to form a stable emulsion of the fat, first portion of the protein material, and carbohydrate. A second portion of a protein material is mixed with the emulsion to form the stable high protein and high fat content emulsion.

In still another aspect, the present invention is a method for forming a dry milk replacer composition. A stable high protein and high fat content protein-fat emulsion containing about 30% to about 50% of a fat, about 30% to about 50% of a protein material, and at least about 10% of a carbohydrate, respectively, by total weight of the fat, protein material, and carbohydrate is provided. The provided stable high protein and high fat content protein material is spray dried to form the dry milk replacer composition.

It is believed that the process of the invention functions as follows to produce the compositions of the present invention relative to conventional processes and compositions, although the scope of the invention is not intended to be interpreted as being limited by the proposed mechanism of operation. In conventional emulsification and drying processes, the protein and the fat are added together in one step, and then are emulsified by homogenizing the protein and the fat. Use of high levels of protein in a conventional process may interfere with the formation of protein-fat micelles, since the concentration of protein is high enough for the protein to agglomerate with itself, instead of forming protein-fat micelles. The fat, therefore, is free to agglomerate with itself to form fat globules. The agglomerated protein in such a milk replacer produces a milk having a gritty mouthfeel, and the fat globules produce a greasy mouthfeel.

In the process of the invention, the fat is homogenized with a first amount of protein at an elevated temperature and pressure, where the protein is not present in a concentration high enough for the protein to substantially agglomerate with itself. The protein is evenly distributed over the fat during homogenization, enhancing the formation of the protein-fat micelles. After homogenization, free fat which is not in the form of a protein-fat micelle is finely dispersed through the homogenized emulsion, preventing formation of fat globules, and readily forming more protein-fat micelles with a second amount of protein material added to the homogenized emulsion. The micelles are stable in an aqueous emulsion or in water, so the emulsion is stable, and milk replacer formed from the emulsion is stable. The combined first and second amounts of the protein may be significantly higher than the upper limit of an amount of protein useful to make an acceptable milk replacer in a conventional one-step protein addition process.

To form the stable high fat and high protein content emulsion of the present invention and the milk replacer formed therefrom, a protein material and a fat are required. Preferably a carbohydrate is also incorporated into the emulsion and milk replacer of the present invention, and most preferably an emulsifier is also included in the emulsion and milk replacer composition. The emulsion and composition may also include a material useful for promoting hydration of the protein material.

The protein material comprises a protein or a protein mixture, whether as a powder, slurry, or solution. Where the protein material is present in an aqueous slurry or solution the protein material may comprise up to about 30% of the solution by weight, preferably about 5% to about 20%, and more preferably about 11% to about 18%. The protein for use in the present invention may be prepared using any of various methods known in the art.

A particularly preferred protein material for use in the present invention is soy protein isolate. Soy protein isolate, as the term is used herein, refers to a soy protein material containing about 90% or greater protein content, and most preferably about 95% or greater protein content. Soy protein isolate is preferably formed from a commercially available defatted soy flake material from which oil has been removed by solvent extraction. The soy flake material is extracted with an aqueous alkaline solution, typically a calcium hydroxide or a sodium hydroxide solution having a pH of about 6 to about 10, to form an extract containing protein and water soluble components of the soy flake material which are separated from the insoluble fibers and cellulosic materials of the flakes. The extract is then treated with an acid to lower the pH of the extract to about the isoelectric point of the protein, preferably to a pH of about 4 to about 5, and most preferably to a pH of about 4.4 to about 4.6, thereby precipitating a protein curd. The protein curd is then separated from the extract and dried using conventional separating and drying means to form the soy protein isolate. Soy protein isolates are commercially available from several manufacturers of soy products, such as Protein Technologies International, Inc. of St. Louis, Missouri.

Another preferred protein material for use in the present invention is casein, e.g., alpha-, beta-, gamma-, and kappa-casein, and mixtures thereof, or a caseinate formed therefrom. Casein is prepared by coagulation of a curd from skim milk. The casein is coagulated by acid coagulation, natural souring, or rennet coagulation. To effect acid coagulation of casein a suitable acid, preferably hydrochloric acid, is added to milk to lower the pH of the milk to about the isoelectric point of the casein, preferably to a pH of about 4 to about 5, and most preferably to a pH of about 4.6 to about 4.8. To effect coagulation by natural souring milk is held in vats to ferment, causing lactic acid to form. The milk is fermented for a sufficient period of time to allow the formed lactic acid to coagulate a substantial portion of the casein in the milk. To effect coagulation of casein with rennet, sufficient rennet is added to the milk to precipitate a substantial portion of the casein in the milk. Acid coagulated, naturally soured, and rennet precipitated casein are all commercially available from numerous manufacturers or supply houses.

Various other natural or synthetic proteins and peptides may by used. Representative examples include: phosphoproteins including those containing phosphoseryl residues, heat denatured proteins including globular proteins such as albumins, and plant protein isolates including oil seed protein isolates and rape seed isolates. Where the stable high fat and high protein content emulsion is for use in forming a milk replacer, edible proteins are selected as the protein material.

The fat component comprises one or more natural or synthetic fats or oils or mixtures thereof. Where the high fat and high protein content emulsion is for use in forming a milk replacer edible fats are selected for the fat component. Preferred materials used as the fat component include palm oil, soy oil, corn oil, vegetable oil, vegetable fat, and coconut oil.

The carbohydrate component, if included with the protein material and the fat, comprises or is derived from one or more natural sugars, starches, sugar solutions, sugar syrups, or mixtures thereof. Where the emulsion is used to form a milk replacer, edible carbohydrates are selected for the carbohydrate component. Particularly preferred carbohydrate sources for the carbohydrate compound include sweet dairy whey, corn syrup, and maltodextrin, or a mixture thereof. Most preferably the carbohydrate is a powdered form of sweet dairy whey.

In a particularly preferred embodiment, the emulsion of the present invention, and a milk replacer composition formed therefrom, include an emulsifier. The emulsifier should be effective to aid in the formation and stability of an emulsion of the protein material, the fat, and the carbohydrate, if a carbohydrate is present in the emulsion. Preferably the emulsifier is a monoglyceride, a diglyceride, sodium steroyl lactylate, or a mixture thereof.

In another particularly preferred embodiment of the invention the emulsion of the present invention, and the milk replacer composition formed therefrom, include a material useful for promoting hydration of the protein material. The hydrating material may be a buffering material which raises the pH of the aqueous emulsion to make the protein material more soluble, or the hydrating material may be a sequestering agent which sequesters metal ions such as calcium to render the protein material more soluble in the emulsion. Alkali phosphates such as dipotassium phosphate, tripotassium phosphate, disodium phosphate, and trisodium phosphate are particularly preferred hydrating agents since they can act as a buffer and as a sequestering agent.

A first portion of the protein material and the fat, and, if included, the carbohydrate, the emulsifier, and the protein hydrating agent are mixed together to form an aqueous mixture. Preferably the aqueous mixture contains up to about 60% solids by weight, where the solids are derived from the protein material, the fat, the carbohydrate, the emulsifier, and/or the hydrating agent. Where neither the carbohydrate component nor the protein material component of the mixture comprises an aqueous solution or slurry, water is added to form the aqueous mixture.

The concentration of the first portion of protein material in the aqueous mixture should not be sufficient to cause substantial protein aggregation which would interfere with the interaction of the protein and the fat to form protein-fat micelles. Preferably the concentration of the first portion of the protein material in the aqueous mixture should not exceed 20% by weight of the total dry weight of the mixture - i.e. the total dry weight of the fat, first portion of protein material, carbohydrate, and emulsifier- and more preferably should be about 5% to about 15% by weight of the total dry weight. The fat is present in the aqueous mixture in a concentration of about 60% to about 80% by weight of the total dry weight, and more preferably about 65% to about 75% by weight of the total dry weight. If necessary, the fat should be heated to melt the fat before adding the fat to the aqueous mixture. The concentration of the emulsifier in the aqueous mixture, if used, should be about 1% to about 5% by weight of the total dry weight, and preferably about 2% to about 3.5% by weight of the total dry weight. The carbohydrate, if used, should be present in the aqueous mixture in a concentration of at least about 10% by weight of the total dry weight. The protein hydrating agent if used, should be present in a quantity effective to aid in hydrating the protein material, preferably up to about 10% by dry weight of the first portion of protein material, and more preferably about 5% to about 8% by weight of the first portion of protein material.

The aqueous mixture is then homogenized to form an emulsion with a conventional homogenizing pump. The aqueous mixture is homogenized at a temperature and a pressure effective to form a stable emulsion of the fat, the first portion of the protein material, and the carbohydrate and emulsifier, if included in the mixture. Preferably the aqueous mixture heated to a temperature of about 65.5°C (150°F) to about 87.8°C (190°F), and more preferably at a temperature of about 71.1°C (160°F) to about 76.6°C (170°F), and then is homogenized.

The homogenization may be a single stage, or a multiple stage process, where the homogenization pressure is varied in a multiple stage process. In the single stage process at least 27.6 MPa (4000 psi) of pressure is applied to homogenize the aqueous mixture, preferably about 27.6 MPa (4000 psi) to about 138 MPa (20,000 psi), more preferably about 27.6 MPa (4000 psi) to about 69 MPa (10,000 psi), and most preferably about 27.6 MPa (4000 psi) to about 34.5 MPa (5000 psi). In the multiple stage process, a first pressure of about 13.8 MPa (2000 psi) to about 27.6 MPa (4000 psi) is applied to homogenize the mixture, then successive stages of less pressure are applied to the mixture. A preferred multiple stage homogenization process is a dual stage process wherein a first pressure of 13.8 MPa (2000 psi) to about 20.7 MPa (3000 psi) is applied to the mixture, followed by a second pressure of about 3.45 MPa (500 psi) to about 6.9 MPa (1,000 psi).

A second portion of the protein material is then added to the emulsion produced by homogenization of the aqueous mixture. The second portion of protein material is added to bring the total weight of the protein material to at least 25% of the total dry weight of the fat and protein material, and the carbohydrate and emulsifier, if included in the emulsion, and more preferably to about 30% to about 50% of the total dry weight. Preferably the dry weight of the second portion of protein material is about 20% to about 90% of the total dry weight of the fat and first portion of protein material, and if included, the carbohydrate and the emulsifier, and more preferably about 40% to about 70% or 80%.

The second portion of protein material may be added to the homogenized emulsion dry, or may be added as an aqueous slurry. Preferably the second portion of the protein material is added as a slurry, where the slurry contains up to about 30% protein material solids, more preferably about 10% to about 20% protein material solids, and most preferably about 13% to about 19% protein material solids. Preferably the slurry is heated to about 65.5°C (150°F) to about 87.8°C (190°F) before the slurry is added to the homogenized emulsion.

A slurry of the second portion of the protein material can be homogenized to ensure that the slurry is smooth and contains no lumps of protein material. Typically the slurry of the second portion of protein material is homogenized if the second portion of protein material is rehydrated from a dry state to form the slurry - if the slurry is formed from wet precipitated protein curd homogenization is not necessary. The slurry may be homogenized by directing the slurry through a conventional homogenization pump at a pressure of about 13.8 MPa (2000 psi) to about 20.7 MPa (3000 psi).

If desired, a carbohydrate may be added to the homogenized emulsion along with the second portion of the protein material. The added carbohydrate is preferably sweet dairy whey, soy whey, corn syrup, maltodextrin, or a mixture thereof, and most preferably is a powdered whey. The amount of carbohydrate added to the homogenized emulsion is preferably about 3% to about 15% by weight of the total dry weight of the fat, first portion of protein material, and, if included in the emulsion, the carbohydrate and the emulsifier, and more preferably is about 5% to about 10% by weight of the total dry weight. Preferably the carbohydrate added to the homogenized emulsion is dispersed in an aqueous slurry of the second portion of the protein material, and added to the homogenized emulsion with the slurry of protein material.

The second portion of protein material, added carbohydrate, if any, and the homogenized emulsion are thoroughly mixed to provide the stable high fat and high protein content emulsion. A stable protein-fat emulsion, as used herein, is defined to be an emulsion which contains little, if any, appreciable amounts of aggregated protein or aggregated fat, and does not readily form appreciable amounts of aggregated protein or aggregated fat. The second portion of protein material, carbohydrate, and homogenized emulsion are mixed with any conventional means for mixing, blending or stirring, and preferably are mixed in an agitating tank.

A dry milk replacer composition in which fat and protein are sufficiently homogeneously dispersed in the composition to effectively inhibit fat agglomeration and protein agglomeration upon dispersal of the composition in water may be formed from the stable high fat and high protein content emulsion by spray drying the emulsion. The emulsion may be spray dried using any conventional spray drying apparatus, preferably a co-current type spray dryer. Preferred conditions for spray drying the emulsion include an atomization pressure of from about 20.7 MPag (3000 psig) to about 34.5 MPag (5000 psig), preferably from about 24.1 MPag (3500 psig) to about 31.0 MPag (4500 psig); a hot air inlet temperature of about 93.3°C (200°F) to about 204.4°C (400°F), preferably about 121.1°C (250°F) to about 193.3°C (380°F); and an exhaust temperature of about 76.6°C (170°F) to about 104.4°C (220°F), preferably about 82.2°C (180°F) to about 93.3°C (200°F)

Alternatively, instead of first combining the second portion of the protein material with the homogenized emulsion and then spray drying to form the dry milk replacer, the dry milk replacer may be formed by co-spray drying the homogenized emulsion and a slurry of the second portion of the protein material and any carbohydrate added to the second portion of the protein material. The homogenized emulsion and the second portion of the protein material may be co-spray dried using any dual-nozzle spray drying technique and using spray drying parameters similar to those described above.

The dry milk replacer may be dispersed in water to form a milk replacer having a desirable concentration and consistency for use as a substitute for bovine whole milk. Other hydrophilic or lipophilic ingredients may be added to or incorporated in the dry milk replacer, such as: minerals, e.g. calcium phosphate or dipotassium phosphate; vitamins; proteins, e.g. lactoglobulins and lactalbumins; and pharmaceuticals, e.g., antibiotics, vaccines, and hormones.

The dry milk replacer composition of the present invention forms a milk upon being hydrated with water. The composition forms a stable suspension in water which does not form signficant amounts of sediment from protein aggregation, and does not substantially separate into an aqeuous phase and an oil phase. Milks formed from the milk replacer composition have significant amounts of free fat therein, the free fat being homogeneously dispersed in small globules throughout the suspension. The homogenously dispersed small fat globules from the composition do not give the milk a greasy mouthfeel, unlike large aggregated fat globules.

The present invention is illustrated in more detail by the following examples:

### EXAMPLE 1

A stable high fat and high protein content emulsion and a dry milk replacer composition are formed using sodium caseinate and soy protein isolate as a protein material. 63.5 kg (140 pounds) of 32.2 °C (90°F) water is added to a 227 L (60 gallon) jacketed agitating tank, and 341 grams of dipotassium phosphate are dispersed into the water. 6.8 kg (15 pounds) of sodium caseinate (Alanate 180 from New Zealand Milk Products) is then added to the water, and the resulting slurry is heated to 82.2°C (180°F) by steam injection, and is mixed for 10 minutes.

45.4 (100 pounds) of palm oil (L# PF-5 from Fuji Oil Co.) is placed in a second jacketed kettle and heated to 71.1°C (160°F) to melt the oil. 477 grams of Dimodan PV Kosher, a distilled monoglyceride emulsifier derived from edible refined hydrogenated soybean oil (available from Grindsted Products), 1,706 grams of Datem, a diacetyl tartaric acid ester of monoglycerides emulsifier (available from Grindsted Products), and 205 grams of sodium steroyl lactylate, a commercially available emulsifier, are added to the melted fat, and the temperature is maintained at 71.1°C (160°F) to melt the emulsifiers.

The palm oil/emulsifier mix is added to the sodium caseinate slurry and mixed for 5 minutes while maintaining the temperature in the tank at 71.1-76.6°C (160°F-170°F). 19.1 kg (42 pounds) of the palm oil/emulsifier/caseinate mixture is placed in a 76 L (20 gallon) jacketed agitating tank, and 2.2 kg (4.8 pounds) of sweet dairy whey powder (Teklak from Foremost Farms) is added to the mixture. The whey powder is mixed in the mixture for 10 minutes while maintaining the temperature in the tank at 71.1-76.6°C (160°F-170°F). The resulting slurry is then passed through a two-stage homogenizer at 17.2 MPa (2,500 psi) and 3.4 MPa (500 psi), respectively while the temperature of the slurry is maintained at 71.1-76.6°C (160-170°F).

144.2 kg (318 pounds) of 32.2°C (90°F) water and 31.1 kg (68.6 pounds) of soy protein isolate 29.9 kg (66 pounds) of Supro Plus 675 and 1.2 kg (2.6 pounds) of Supro 670, both from Protein Technologies International) are placed in a 473 L (125 gallon) jacketed agitating tank to form a protein slurry. The slurry is heated to 76.6°C (170°F) by steam injection and is mixed for 15 minutes to make sure the slurry is smooth and free of lumps. The slurry is homogenized at 17.2 MPa (2,500 psi). 31.3 kg (69 pounds) of the homogenized protein slurry is combined with 1.5 kg (3.3 pounds) of sweet dairy whey powder in another jacketed agitating tank, and the protein and whey are mixed for 5 minutes.

15.7 kg (34.7 pounds) of the homogenized palm oil/caseinate/emulsifier mixture is added to the protein/whey slurry and mixed to form a stable high fat and high protein content emulsion. The pH of the emulsion is adjusted to 7.4 with 136 ml of 45% potassium hydroxide while the temperature of the emulsion is maintained at 71.1-76.6°C (160°F-170°F).

The emulsion is spray dried at an atomization pressure of 24.1 Mpa (3500 psi) and a Spraying Systems No. 76 nozzle orifice. The spray dryer hot air inlet temperature is 137.2°C (279°F) and the exhaust temperature is 82.2°C (180°F). 5 pounds of a dry milk replacer composition are recovered from the spray dryer.

### EXAMPLE 2

A soy protein isolate stable high fat and high protein content emulsion and dry milk replacer are formed.

29.1 kg (64.1 pounds) of palm oil is added to a jacketed kettle and heated to 71.1°C (160°F) to melt the oil. 2,338 grams of Datem and 272 grams of sodium steroyl lactylate are added to the melted fat, and the temperature of the mixture is maintained at 71.1°C (160°F) to melt the emulsifiers.
44.5 kg (98 pounds) of 32.2°C (90°F) water are added to a separate 227 L (60 gallon) jacketed agitating tank, and 817 grams of dipotassium phosphate is dispersed in the water. 5.1 kg (11.2 pounds) of soy protein isolate (FP 940 available from Protein Technologies International, Inc) is added to the water under agitation. The resulting slurry is heated to 82.2°C (180°F) by steam injection, and is mixed for 10 minutes.

The palm oil/emulsifier mixture is added to the protein slurry and mixed for 5 minutes while maintaining the temperature at 71.1-76.6°C (160°F-170°F). 8.0 kg (17.6 pounds) of sweet dairy whey powder is added to the slurry and the slurry is mixed for another 10 minutes while maintaining the temperature at 71.1-76.6°C (160°F-170°F). The hot slurry is passed through a two-stage homogenizer at 17.2 Mpa (2,500 psi) and 3.4 Mpa (500 psi) and is collected in a jacketed agitating tank.

A protein slurry is formed by placing 37.4 kg (82.5 pounds) of soy protein isolate 29.9 kg (66 pounds) of Supro 675 and 7.5 kg (16.5 pounds) of Supro 670) and 149.7 kg (330 pounds) of 32.2°C (90°F) water in a 437 L (125 gallon) jacketed agitating tank. The slurry is heated to 76.6°C (170°F) by steam injection and is mixed for 15 minutes to ensure that the slurry is smooth and free of lumps. The protein slurry is then homogenized at 17.2 MPa (2,500 psi).

6.5 kg (14.4 pounds) of the protein slurry solids are combined with 11.1 kg (24.4 pounds) of the palm oil/protein/emulsifier slurry solids in a jacketed agitating tank. The pH of the resulting slurry is adjusted to 7.5 using 100 ml of 45% potassium hydroxide, and the slurry is mixed for 10 minutes to form the stable high fat and high protein content emulsion.

The emulsion is spray dried to form the dry milk replacer composition, utilizing spray drying conditions similar to those described above in Example 1.

### EXAMPLE 3

The protein and fat content and the globule size distribution of free fat is examined for a dry milk replacer composition formed according to the present invention, and for a dry milk replacer composition formed according to a conventional process utilizing a low protein content.

A high protein content dry milk replacer composition is formed according to the process set forth in Example 1.

A conventional dry milk replacer composition is formed by the following process. 45.4 kg (100 pounds) of palm oil are added to a jacketed kettle and heated to 71.1°C (160°F) to melt the oil. 477 grams of Dimodan PV Kosher, 1706 grams of Datem, and 205 grams of sodium steroyl lactylate are added to the melted fat, and the temperature is maintained at 71.1°C (160°F) to melt the emulsifiers.

63.5 kg (140 pounds) of 32.2°C (90°F) water are added to a 227 L (60 gallon) jacketed agitating tank, and 341 grams of dipotassium phosphate are dispersed into the water. 6.8 kg (15 pounds) of sodium caseinate are added to the water, and the resulting slurry is heated by steam injection to 82.2°C (180°F) and is mixed for 10 minutes. The palm oil/emulsifier mixture is added to the protein slurry and mixed for 5 minutes while maintaining the temperature at 71.1-76.6°C (160°F-170°F).

31.3 kg (69 pounds) of the palm oil/caseinate/emulsifier mixture is placed in a76 L (20 gallon) jacketed agitating tank, and 3.5 kg (7.8 pounds) of whey powder is added to the mixture. The mixture is then stirred for 10 minutes while maintaining the temperature at 71.1-76.6°C (160°F-170°F). The hot mixture is then passed through a two stage homogenizer at 17.2 MPa (2500 psi) and 3.4 MPa (500 psi), respectively. The resulting emulsion is spray dried under the conditions set forth in Example 1 to form the conventional dry milk replacer composition, except the inlet temperature of the spray dryer is 97.2°C (207°F) instead of 137.2°C (279°F). 2.3 kg (5 pounds) of the composition are collected from the spray dryer.

A sample of the high protein content dry milk replacer and a sample of the conventional dry milk replacer are evaluated for percent protein content (dry basis), percent fat content (dry basis), percent free fat (dry basis) The results of the evaluation are set forth in Table 1

**TABLE 1**

| Milk Replacer | % Protein | % Fat | % Free Fat |
|---|---|---|---|
| Conventional | 12.3 | 71.0 | 55.8 |
| High Protein | 36.0 | 41.2 | 37.4 |

Clearly, the dry milk replacer formed according to the present invention has a substantially higher protein content and a relatively lower fat concentration than a conventional dry milk replacer.

The conventional dry milk replacer and the high protein content dry milk replacer are also analyzed to determine the size distribution of globules of free fat in the milk replacers. Homogeneous suspensions of small globules of free fat are desirable in a milk replacer so the milk replacer will not have a greasy mouthfeel which is imparted by significant quantities of large fat globules. A 1% sample, by weight of each milk replacer is mixed in water, and the resulting suspensions are analyzed microscopically to estimate the size distribution of the free fats in the suspensions. The results are set forth in Table 2.

**TABLE 2**

| Sample | Free Fat Globules < 3 Microns (%) | Free Fat Globules 3-15 Microns (%) | Free Fat Globules > 15 Microns (%) |
|---|---|---|---|
| Conventional | 94 | 5 | 1 |
| High protein | 98 | 2 | 0 |

The size distribution of the free fat globules in the high protein milk replacer of the present invention is quite comparable to a conventional milk replacer, and does not include a significant amount of large fat globules which would give the milk replacer a greasy mouthfeel.

## Claims

1. A composition comprising a stable aqueous emulsion of a protein material, a fat, and a carbohydrate, wherein the fat is present in an amount of 25% to 50%, the protein material is present in an amount of 25% to 50%, and the carbohydrate is present in an amount of at least 10%, by weight of the combined weight of the protein material, fat, and carbohydrate.

2. A composition according to claim 1 further comprising an emulsifier present in an amount of 1% to 5% by weight of the combined weight of the protein material, fat, carbohydrate, and emulsifier.

3. A dry milk replacer composition comprising a protein material present in an amount of at least 25% and a fat present in an amount of at least 25%, by weight of the composition, wherein the protein material and the fat are sufficiently homogeneously dispersed in the composition to effectively inhibit fat agglomeration and protein material agglomeration upon dispersion of the composition in water.

4. A composition according to claim 3, wherein the protein material is present in an amount of 30% to 50% by weight of the composition.

5. A composition according to claim 3 or claim 4, wherein the fat is present in an amount of 30% to 50% by weight of the composition.

6. A composition according to any of claims 3 to 5, wherein the composition further contains a carbohydrate present in an amount of at least 10% by weight of the composition.

7. A composition according to any of claims 1,2 and 6, wherein the carbohydrate is derived from sweet dairy whey, corn syrup, maltodextrin, and mixtures thereof.

8. A composition according to any of claims 3 to 7, wherein the composition further comprises an emulsifier present in an amount of 1% to 5% by weight of the composition.

9. A composition according to claim 2 or claim 8, wherein the emulsifier is selected from a monoglyceride, a diglyceride, sodium steroyl lactylate, and mixtures thereof.

10. A composition according to any preceding claim, wherein the protein material is selected from soy protein isolate, casein, and mixtures thereof.

11. A composition according to any preceding claim, wherein the fat is selected from palm oil, vegetable fat, vegetable oil, coconut oil, soy oil, corn oil, and mixtures thereof.

12. A method for forming a stable high protein and high fat content emulsion comprising:
providing an aqueous mixture of a fat, a carbohydrate, and a first portion of a protein material;
homogenizing the aqueous mixture at a temperature and a pressure effective to form a stable emulsion of the fat, the first portion of the protein material, and the carbohydrate; and
mixing a second portion of the protein material with the emulsion.

13. A method according to claim 12, wherein in the aqueous mixture the fat is present in an amount of 60% to 80%, the first portion of the protein material is present in an amount of 5% to 15%, and the carbohydrate is present in an amount of at least 10%, by weight of the combined weight of the fat, first portion of protein material, and carbohydrate.

14. A method according to claim 12 or claim 13, wherein the aqueous mixture contains up to 60% solids by weight.

15. A method according to any of claims 12 to 14, wherein the aqueous mixture is homogenized in a single stage at a temperature of 65.5°C (150°F) to 87.8°C (190°F) under a pressure of at least 27.6 MPa (4000 psi).

16. A method according to any of claims 12 to 14, wherein the aqueous mixture is homogenized at a temperature of 65.5°C (50°F) to 87.8°C (190°F) and under a pressure of 13.8 MPa (2000 psi) to 20.7 MPa (3000 psi) in a first sequential stage, and under a pressure of 3.4 mPa (500 psi) to 6.9 mPa (1000 psi) in a second sequential stage.

17. A method according to any of claims 12 to 16, wherein the aqueous mixture is homogenized at a temperature of 71.1°C (160°F) to 76.6°C (70°F).

18. A method according to any of claims 12 to 17, wherein the second portion of the protein material has a dry weight equivalent of 20% to 90% of the dry combined weight of the fat, first portion of protein material, and carbohydrate.

19. A method according to claim 18, wherein the second portion of the protein material has a dry weight equivalent of 40% to 70%.

20. A method according to any of claims 12 to 19, wherein the second portion of the protein material is mixed in the form of an aqueous slurry.

21. A method for forming a dry milk replacer composition, which comprises spray drying a stable high fat and high protein content protein-fat emulsion containing 30% to 50% of a fat, 30% to 50% of a protein material, and at least 10% of a carbohydrate, by weight of the combined weight of the fat, protein material, and carbohydrate.

22. A method according to any of claims 12 to 21, wherein the protein material is selected from soy protein isolate, casein, and mixtures thereof.

23. A method according to any of claims 12 to 22, wherein the fat is selected from palm oil, vegetable fat, vegetable oil, coconut oil, soy oil, corn oil, and mixtures thereof.

24. A method according to any of claims 12 to 23, wherein the carbohydrate is derived from sweet dairy whey, corn syrup, maltodextrin, and mixtures thereof.

25. A method according to any of claims 12 to 24, wherein the stable high fat and high protein content protein-fat emulsion further contains an emulsifier present in an amount of 1% to 5% by weight of the combined weight of the fat, protein material, carbohydrate, and emulsifier.

26. A method according to claim 25, wherein the emulsifier is selected from a monoglyceride, a diglyceride, sodium steroyl lactylate, and mixtures thereof.

27. A method according to any of claims 12 to 26 adapted to form a composition as defined in any of claims 1 to 11.
